# EUROPEAN PATENT APPLICATION

(11) **EP 4 503 680 A1**
(43) Date of publication of application: **05.02.2025**
(21) Application number: 23189381.9
(22) Date of filing: 03.08.2023
(51) Int. Cl.: H04W 8/00, H04L 5/00, H04W 64/00, H04W 72/00, H04W 88/06

(54) **A METHOD FOR SENSING ASSISTED POSITIONING**

(71) Applicant: Robert Bosch GmbH, 70442 Stuttgart (DE)
(72) Inventor: Hassan, Khaled Shawky, 31157 Sarstedt (DE); Jornod, Guillaume, 10243 Berlin (DE); Stark, Maximilian, 20249 Hamburg (DE)

(57) **Abstract**

The invention relates to a method (100) for sensing assisted positioning, at a reduced capability user equipment (10), comprising the following steps, which preferably are performed repeatedly, preferably periodically and automatically, wherein the reduced capability user equipment (10) is configured to operate with two frequency ranges (1,2), each with a different bandwidth:
- Activating (101) a first frequency range (1) for transmitting a sensing signal based on a configuration information,
- Transmitting (102) the sensing signal in the first frequency range (1), wherein the sensing signal comprises a sidelink positioning reference signal (7), and
- Switching (103) to the second frequency range (2) for transmitting and/or receiving data after finishing the transmitting of the sensing signal.

## Description

The invention relates to a method for sensing assisted positioning. Furthermore, the invention relates to a user equipment with reduced capabilities for sensing assisted positioning and a node for this purpose. Moreover, the invention relates to a corresponding computer program and a computer-readable medium.

### State of the art

Radio sensing has become increasingly important, as the demand for smartness of devices is drastically increasing. Unlike conventional sensing, radio sensing uses existing radio signals or devices to passively sense the ambient environment for low cost and wide deployment. Cellular networks such as 5G radio networks provide usage of a high frequency, large bandwidth, or antenna array, making them usable for radio sensing. Signals transmitted by a radio device and received by another radio device contain variations caused by objects in the ambient environment between the transmitter and the receiver. Hence, measurements of these signals can be used to sense the environment.

In radio-based positioning in a cellular network, a device can locate itself and can be located by using sent and received radio-waves. To perform a valuable sensing or positioning, the resolvability of the paths is an important factor. Therefore, the device should provide means with a high bandwidth for resolving the individual paths. In cellular networks devices with reduced capabilities are operated. Currently, in 3GPP Release 18, these devices with reduced capabilities, so called RedCap UEs, are only able to transmit or receive data on one frequency band with a bandwidth of 5 Mhz, for example. However, broadcast control information and/or reference symbols are transmitted with a bandwidth of 20 MHz. Therefore, from time to time the reduced capability device lock onto another frequency band with 20 MHz bandwidth to receive information about its operating frequency band with 5Mhz bandwidth for transmitting and receiving data. After decoding this information, the device locks to this operational frequency band to transmit and receive data. However, this only enables the device to switch to another frequency band providing a higher bandwidth but disadvantageously only to receive a signal but not to transmit one with a sufficient bandwidth.

### Disclosure of the invention

It is therefore an object of the present invention to at least partially overcome the disadvantages described above. In particular, it is an object of the present invention, to provide a method for a user equipment with reduced capabilities to improve a positioning in a cellular network.

The above object is solved by a method with the features of claim 1, a Reduced Capability User Equipment with the features of claim 9, a method with the features of claim 10, and a node with the features of claim 11. Further features and details of the invention are disclosed in the respective dependent claims, the description, and the drawings. Features and details described in connection with the inventive method also apply to the inventive Reduced capability user equipment as well as the inventive node, and vice versa in each case, so that with respect to the disclosure concerning the individual aspects of the invention reference can always be made mutually.

The object is particularly solved by a method for sensing assisted positioning at a reduced capability user equipment. The method according to a first aspect of the invention comprises the following steps, which preferably are performed repeatedly, preferably periodically and automatically, wherein the reduced capability user equipment is configured to operate with two frequency ranges, each with a different bandwidth:
- Activating a first frequency range for transmitting a sensing signal based on a configuration information,
- Transmitting the sensing signal in the first frequency range, wherein the sensing signal comprises a sidelink positioning reference signal, and
- Switching to the second frequency range for transmitting and/or receiving data after finishing the transmitting of the sensing signal.

This allows the Reduced Capability user equipment to advantageously perform a more efficient sidelink positioning or sensing procedure in a cellular network. Further, this advantageously improves the capabilities of the Redcap UE for determining its own location or acquiring accurate positioning information. This kind of user equipment contains reduced capabilities such as a smaller number of antennas and reduced receive and transmit bandwidth capabilities. Reduced capability user equipment are devices with a limited complexity, where complexity means processing of data for higher modulation and coding at very high data rate. Further, such a RedCap UE only provides a limited transmission power, keeping the device or user equipment running on batteries for a sufficient operation time. Furthermore, this kind of UE only provides a limited bandwidth, which reduces complexity and/or transmission power. In the cellular network precise positioning is performed by using dedicated positioning or sensing reference signals (PRS). These signals span over the available bandwidth. Positioning can be defined as determining a location of active user equipment, for example user equipment with sufficient and full receive and transmit capabilities. Sensing describes the process of detection and localization of passive targets, i.e., objects without receiving capabilities.

In a further embodiment the first frequency range provides a full sensing bandwidth for the transmission of the sensing signal and/or the configuration information is received from a network function of a cellular network. This allows the RedCap UE to transmit a more accurate and efficient sensing signal comprising positioning reference signals to advantageously support a more efficient positioning. The full sensing bandwidth refers to the entire range of frequencies or radio spectrum that is available for use by the cellular network. Therefore, this allows the Redcap UE to transmit and not only to receive with a higher data rate in the first frequency range and advantageously can transmit sensing signals with an improved reliability. Further, this has the advantage that the performance for sensing and/or positioning can be significantly improved by transmitting more accurate reference signals.

In another embodiment the configuration information comprises at least one of the following information:
- a frequency information comprising at least a bandwidth for each of the first and/or second frequency range, wherein the bandwidth of the first frequency range is larger than the bandwidth of the second frequency range,
- a time information comprising a duration Tᵢ of the sensing signal, wherein the duration Tᵢ is measured in number of symbols for the sidelink positioning reference signal,
- a periodicity information, wherein the periodicity is specified by a duration T, which is composed by the duration Tᵢ for transmitting the sensing signal and by a duration T_{d} for transmitting and receiving data.

This allows a more efficient sensing procedure and advantageously increases the capabilities for supporting a more accurate and precise positioning.

In a further embodiment the duration T further comprises a duration Tₛ, in case that the bandwidth of the first frequency range and the duration Tᵢ of the sensing signal comprise a time-frequency duality. This duality means that the larger the first frequency range is the shorter is the duration Tᵢ of the sensing signal comprising the positioning or sensing reference symbols. To compensate this duality, a silent time period Tₛ can be implemented after the transmission period Tᵢ or the duration Tᵢ of the activated first frequency range. This allows a more efficient transmission of the sensing signal to increase the accuracy of sensing.

In another embodiment the first frequency range for transmitting the sensing signal is different from the second frequency range for transmitting and receiving data and/or a subcarrier spacing of the first frequency range is different from the subcarrier spacing of the second frequency range. Using subcarrier spacing for transmitting the sensing signal allows a higher spectral efficiency of the transmitted sensing signal. Subcarrier spacing can be understood as the spacing or separation between individual subcarriers within a given frequency range. The subcarrier spacing determines the number of subcarriers that can be accommodated within the available bandwidth. By selecting the appropriate subcarrier spacing, it is possible to achieve high spectral efficiency and can support a more efficient utilization of the first frequency range. A smaller subcarrier spacing allows for more subcarriers to be packed within the available bandwidth of the first frequency range, resulting in a higher data rate transmission capability. This is beneficial for the sensing or positioning procedure.

In another embodiment the transmitting step of the inventive method comprises the following further step:
- Performing a frequency hopping transmission of the sensing signal, wherein the bandwidth of the transmitted sensing signal corresponds to the first frequency range, wherein the bandwidth of the first frequency range is pre-configured as a fixed bandwidth, which is equal or smaller than the bandwidth of the second frequency range.

Frequency hopping has the advantage of a more efficient utilization of the available frequency range. Frequency hopping is a technique used in cellular networks, where the frequency of the transmitted signal is rapidly changed or hopped across different frequencies within a designated frequency range. Further, this allows to enhance the reliability and security of the wireless communication.

In a further embodiment the inventive method comprises the following further step:
- Receiving the configuration information for a sidelink communication, which specifies a transmission on two frequency ranges, wherein the first frequency range is configured to transmit a sensing signal comprising the sidelink positioning reference signal, and wherein a second frequency range is configured to transmit and/or receive data.

This allows the Reduced Capability user equipment to advantageously improve its capabilities regarding a more efficient and more accurate sensing and/or positioning.

In a further embodiment method comprises the following further step:
- Transmitting and/or receiving data via an Uᵤ-interface and/or via a PC5-interface after finishing the switching to the second frequency range.

Using the Uᵤ-interface and/or the PC5-interface allows an effective transmission of data. The Uᵤ-interface is a wireless air interface between a User Equipment and the node of the cellular network. It is the interface through which the RedCap UE can communicate with the cellular network, enabling for example data transmission and/or signaling. The PC5-interface is a further network interface for example between two neighbouring user equipment.

According to a second aspect of the invention there is provided a reduced capability user equipment for sensing assisted positioning. The RedCap UE comprises a transceiver, which is configured to operate with two frequencies, each with a different bandwidth, and a processor coupled with the transceiver, wherein the processor is configured to execute the steps of the method according to the inventive method. The RedCap UE optionally comprise a memory, wherein the memory is coupled to the processor and the memory comprises instructions to execute the inventive method. Thus, this Reduced Capability user equipment according to the invention brings the same advantages as have been described in detail with reference to the inventive method.

According to a third aspect of the invention there is provided a method for sensing assisted positioning at a node of a cellular network, comprising the following step:
- Sending a configuration information for a sidelink communication, which specifies a transmission of the sensing signal on two frequency ranges, wherein the first frequency range is configured to transmit a sensing signal comprising the sidelink positioning reference signal, and wherein a second frequency range is configured to transmit and/or receive data.

Here, the configuration information is preferably sent to a reduced capability user equipment according to the second aspect. Thus, this method according to the invention brings the same advantages as have been described in detail with reference to the inventive method.

According to a fourth aspect of the invention there is provided node of a cellular network, comprising:
- a management function, which is configured to control a configuration of at least one reduced capability user equipment in the cellular network,
- a processor coupled with the management function, wherein the processor is configured to execute the step of the inventive method.

Optionally, the management function can be a sidelink sensing management function or a sidelink localization management function Thus, the node according to the invention brings the same advantages as have been described in detail with reference to the inventive method.

According to a fifth aspect of the invention there is provided a computer program comprising instructions to cause
- the reduced capability user equipment according to the second aspect, or its respective embodiments, to executive the steps of the method according to the first aspect, or its respective embodiments, and/or
- the node according to the fourth aspect to executive the steps of the method according to the third aspect.

According to a sixth aspect of the invention there is provided a computer-readable medium having stored thereon the computer program according to the fifth aspect.

Further advantages, features and details of the invention will be apparent from the following description, in which embodiments of the invention are described in detail with reference to the drawings. In this context, the features mentioned in the claims and in the description may each be essential to the invention individually or in any combination. Showing:
- Fig. 1:: An exemplary embodiment of the inventive method;
- Fig. 2:: A further exemplary embodiment of the inventive method;
- Fig. 3:: A further exemplary embodiment of the inventive method;
- Fig. 4:: A further exemplary embodiment of the inventive method; and
- Fig. 5:: A further exemplary embodiment of the inventive method.

It is the core of the invention to use the technical ability of a Reduced Capability user equipment 10, also called Redcap UE, to perform a frequency range switching for transmitting a sensing signal. This enables a more accurate and efficient sensing procedure conducted by the Redcap UE 10. The RedCap UE 10 that performs positioning and/or sensing is configured to transmit on two different frequency ranges 1,2. The first frequency range 1 is the one configured for sensing / positioning, which corresponds to a full sensing bandwidth. This allows the transmission of a sensing signal, i.e., transmitting sidelink positioning reference signals (SL PRS). The frequency range location is predetermined in a configuration information, which can be configured by the network or pre-configured as the first frequency range 1 comprising a first bandwidth (BWP1). After finishing the transmission of the sensing signal, the RedCap UE 10 automatically switches to the second frequency range 2 comprising a narrower second bandwidth (BWP2). On this second frequency range 2 the RedCap UE 10 can transmit and/or receive data. Such data can be originated or terminated at a node 55 or base station 55 of the cellular network 50, like for example a so called gNB. This node 55 is communicating over a Uᵤ-interface 60 of the cellular network 50. Alternatively, such data can be originated or terminated at another user equipment 20 using communication over a PC5 interface 61 of the cellular network 50.

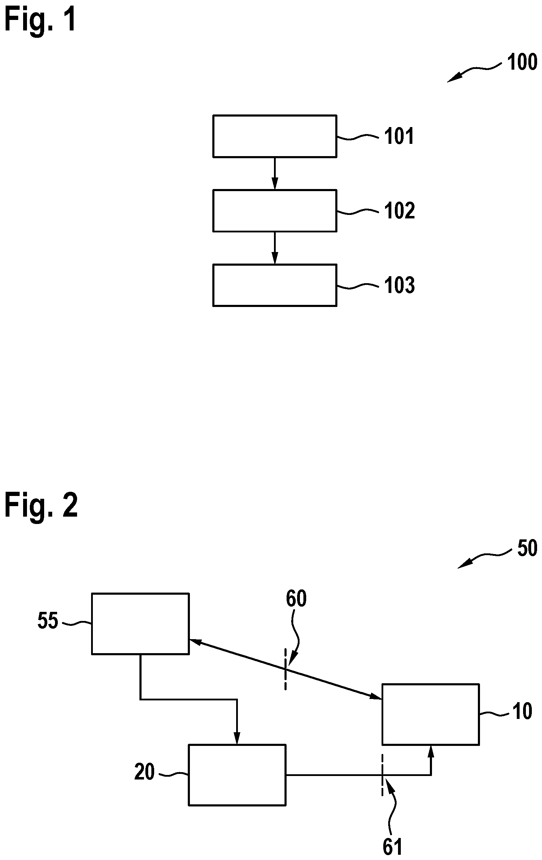

Fig. 1 shows an embodiment of the inventive method 100 for a Reduced capability user equipment 10. Fig. 1 illustrates according to one embodiment of the invention a method 100 for sensing assisted positioning, at a reduced capability user equipment 10, comprising the following steps, which are performed periodically and automatically, wherein the reduced capability user equipment 10 is configured to operate with two frequency ranges 1,2, each with a different bandwidth.

According to step 101 a first frequency range 1 for transmitting a sensing signal is activated based on a configuration information.

According to step 102 the sensing signal is transmitted in the first frequency range 1, wherein the sensing signal comprises a sidelink positioning reference signal 7.

Then, according to step 103, the reduced capability user equipment 10 switches to the second frequency range 2 for transmitting and/or receiving data after finishing the transmitting 102 of the sensing signal.

Fig. 2 illustrates a further embodiment of the inventive method 100 for a Reduced capability user equipment 10. The Reduced Capability user equipment 10 or RedCap UE 10 can be configured by the cellular network, for example by the node 55 of the cellular network 50. This can be performed by transmitting a configuration information to the RedCap UE 10, wherein the configuration information comprises a bandwidth for the first frequency range 1 in which the reduced capability user equipment 10 should operate. The RedCap UE 10 receives the transmitted configuration information from the node 55. The first frequency range 1 can be configured as a first bandwidth part such as a full sensing bandwidth part for transmitting sensing and/or positioning reference signals 7. The full sensing bandwidth can comprise a bandwidth of at least 20 Mhz for the cellular network 50. The configuration information can be transmitted via a cellular network interface such as an Uᵤ-interface 60. The Uᵤ-Interface 60 should be understood as the air interface between a user equipment 20 or a Reduced Capability user equipment 10 and a node 55 or base station 55 or of a cellular network 50, also known as the gNodeB (gNB). The Uᵤ-interface 60 is responsible for providing wireless communication and data transfer between the UE 10, 20 and the network 50. It is also possible to transmit the configuration information via a different network interface such as a PC5-Interface 61. The PC5-interface 61 refers to the interface between two neighbouring user equipment 10, 20 or between a user equipment 10, 20 and a nearby cell in the cellular network 50. The PC5-interface 61 is used for direct device-to-device (D2D) communication without relying on the node 55 (gNodeB/gNB) or a core network. The Reduced capability user equipment 10 as shown in Fig. 2 comprises a transceiver. The transceiver is configured to operate with two frequency ranges 1,2, each with a different bandwidth. Further, the RedCap UE 10 can comprise a processor coupled with the transceiver and/or a memory comprising instructions to execute the inventive method.

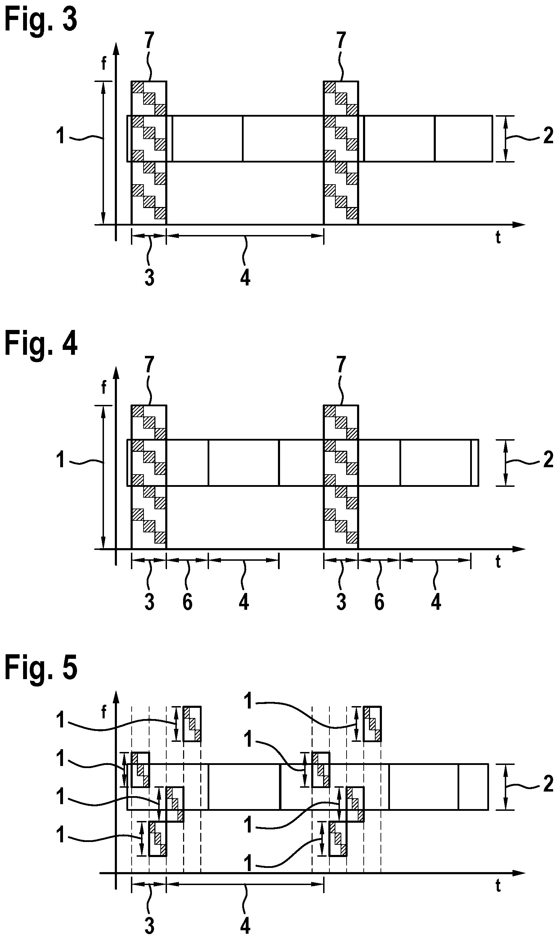

Fig. 3 illustrates a further embodiment of the inventive method 100. Fig. 3 depicts the operation of the RedCap UE 10 over time regarding the transmitting and/or receiving in the two configured frequency ranges 1,2. The first frequency range 1 comprises a bandwidth such as a so-called bandwidth part 1, which is designed to allow a full transmission of a sensing signal comprising several sensing reference signals 7 or positioning reference signals 7 during a time period or duration Ti 3. The first frequency range 1 can be configured with a bandwidth of at least 20 MHz. After the transmission of the sensing signal the reduced capability user equipment 10 switches to the second frequency range 2 configured for data communication. During this time period or duration T_{d} 4 the user equipment 10 can transmit or to receive data. The bandwidth of the second frequency range 2 is smaller than the bandwidth of the first frequency range 1. For example, the bandwidth of the second frequency range 2 can be 5 Mhz.

Based on the configured periodicity T 5, which is composed based on the duration Tᵢ 3 and the duration T_{d} 4 as depicted in Fig. 3, the user equipment 10 switches periodically and/or automatically to the first or second frequency range 1,2.

For example, the configuration information of the first frequency range 1 or the first bandwidth part 1 should contain a frequency information regarding the first frequency range 1 comprising for example a bandwidth of 20 Mhz or 100 Mhz. Further, it can comprise an allocation information regarding the carrier frequency, and/or a number of subchannels and/or physical resource blocks or other relevant information for configuring the first frequency range 1 or the second frequency range 2. Furthermore, the configuration information can also comprise a time information for the duration of the sensing impulse measured in the number of signals or symbols during the duration Tᵢ 3. Optionally, the configuration information can contain a pattern of the positioning reference signals 7 or the sensing reference signal 7.

Fig. 4 shows a further embodiment of the inventive method 100. Fig. 4 illustrates a further embodiment of the operation of the RedCap UE 10 over time regarding the transmitting and/or receiving in the two configured frequency ranges 1,2. Basically, this embodiment is similar to the embodiment in Fig. 3. However, the first frequency range 1 and the duration of the sensing signal have a time-frequency duality relationship in this embodiment. This duality means that the larger the first frequency range 1 is the shorter is the duration Tᵢ 3 of the sensing signal comprising the positioning or sensing reference symbols 7. To compensate this duality, a silent time period or duration Tₛ 6 can be implemented after the transmission period Tᵢ 3 or the duration Tᵢ 3 of an activated first frequency range 1. This can be implemented in a way such that the duration Tᵢ 3 and the duration Tₛ 6 can have a fixed duration or time period and a preconfigured number measured in the number of symbols 7 relative to a reference subcarrier spacing e.g., of that of the second frequency range 2. In order to enable an efficient transmission of the sensing signal, e.g. the transmission of the sensing reference symbols 7 or the positioning reference symbols 7 on the first frequency range 1 the configuration information can comprise for example that as a first option the first frequency range 1 can be different from the second frequency range2 ; for example, the first frequency range 1 can be chosen as Frequency Range FR2, FR3 or FR4 according to the 5G NR standards, while the second frequency range 2 can be FR1. A second option can be that a subcarrier spacing (SCS) of the first frequency range 1 can be different from the subcarrier spacing of the second frequency range 2. For example, the first frequency range 1 can contain a subcarrier spacing of 60 or 120 kHz, while the second frequency range 2 can contain a subcarrier spacing of 15 or 30 kHz.

In a 5G cellular network, the terms FR1, FR2, FR3, and FR4 are used to classify different frequency ranges. FR1 or Frequency Range 1 provides a frequency range from 450 MHz to 6000 MHz. FR2 or Frequency Range 2 provides a frequency range from 24250 MHz to 52600 MHz. FR2 provides a higher bandwidth and enables extremely high data transfer rates. Frequency bands such as 24 GHz, 28 GHz, 39 GHz, and 47 GHz typically can fall within this range. FR3 and FR4 are yet not defined according to the 3GPP standards or have not yet been standardized.

Fig. 5 illustrates a further embodiment of the inventive method 100. Fig. 5 depicts an embodiment illustration a frequency hopping approach regarding the configuration of the first frequency range 1. In contrary to Fig.3 and Fig.4, Fig. 5 depicts the transmission of the sensing signal comprising the sensing or positioning reference symbols 7 using frequency hopping on a first frequency range 1. The bandwidth of the first frequency range 1 comprises a fixed bandwidth value, wherein the bandwidth is configured to be smaller or equal to the bandwidth of the second frequency range 2. Optionally, the first frequency range 1 can contain a higher subcarrier spacing than the subcarrier spacing of the second frequency range 2. Frequency hopping is a method of transmitting radio signals by rapidly changing the carrier frequency among many frequencies occupying a large frequency band.

The above explanation of the embodiments describes the present invention in the context of examples. Of course, individual features of the embodiments can be freely combined with each other, if this is technically reasonable, without leaving the scope of the present invention.

## Claims

1. A method (100) for sensing assisted positioning, at a reduced capability user equipment (10), comprising the following steps, which preferably are performed repeatedly, preferably periodically, and automatically, wherein the reduced capability user equipment (10) is configured to operate with two frequency ranges (1,2), each with a different bandwidth:
- Activating (101) a first frequency range (1) for transmitting a sensing signal based on a configuration information,
- Transmitting (102) the sensing signal in the first frequency range (1), wherein the sensing signal comprises a sidelink positioning reference signal (7), and
- Switching (103) to the second frequency range (2) for transmitting and/or receiving data after finishing the transmitting of the sensing signal.

2. The method (100) of claim 1, **characterized in that** the first frequency range (1) provides a full sensing bandwidth for the transmission of the sensing signal and/or the configuration information is received from a network function of a cellular network (50).

3. The method (100) of claim 1 or claim 2, **characterized in that** the configuration information comprises at least one of the following information:
- a frequency information comprising at least a bandwidth for each of the first and/or second frequency range (1,2), wherein the bandwidth of the first frequency range (1) is larger than the bandwidth of the second frequency range (2),
- a time information comprising a duration Tᵢ (3) of the sensing signal, wherein the duration Tᵢ (3) is measured in number of symbols for the sidelink positioning reference signal (7),
- a periodicity information, wherein the periodicity is specified by a duration T, which is composed by the duration Tᵢ (3) for transmitting the sensing signal and by a duration T_{d} (4) for transmitting and receiving data.

4. The method (100) of claim 3, **characterized in that** the duration T further comprises a duration Tₛ (6), in case that the bandwidth of the first frequency range (1) and the duration Tᵢ (3) of the sensing signal comprise a time-frequency duality.

5. The method (100) of any one of the preceding claims, **characterized in that** the first frequency range (1) for transmitting (102) the sensing signal is different from the second frequency range (2) for transmitting and receiving data and/or a subcarrier spacing of the first frequency range (1) is different from the subcarrier spacing of the second frequency range (2).

6. The method (100) of any one of the preceding claims, **characterized in that** the transmitting (102) comprises the following further step:
- Performing a frequency hopping transmission of the sensing signal, wherein the bandwidth of the transmitted sensing signal corresponds to the first frequency range (1), wherein the bandwidth of the first frequency range (1) is pre-configured as a fixed bandwidth, which is equal or smaller than the bandwidth of the second frequency range (2).

7. The method (100) of any one of the preceding claims, **characterized in that** the method comprises the following further step:
- Receiving the configuration information for a sidelink communication, which specifies a transmission on two frequency ranges (1,2), wherein the first frequency range (1) is configured to transmit a sensing signal comprising the sidelink positioning reference signal (7), and wherein a second frequency range (2) is configured to transmit and/or receive data.

8. The method (100) of any one of the preceding claims, **characterized in that** the method (100) comprises the following further step:
- Transmitting and/or receiving data via an Uᵤ-interface (60) and/or via a PC5-interface (61) after finishing the switching (103) to the second frequency range (2).

9. Reduced capability user equipment (10) for sensing assisted positioning, comprising:
- a transceiver, which is configured to operate with two frequency ranges (1,2), each with a different bandwidth,
- a processor coupled with the transceiver, wherein the processor is configured to execute the steps of the method (100) according to any one of the preceding claims.

10. A method (100) for sensing assisted positioning, at a node (55) of a cellular network (50), comprising the following steps:
- Sending a configuration information for a sidelink communication, which specifies a transmission on two frequency ranges (1,2), wherein the first frequency range (1) is configured to transmit a sensing signal comprising the sidelink positioning reference signal (7), and wherein a second frequency range (2) is configured to transmit and/or receive data.

11. A node (55) of a cellular network (50), comprising:
- a management function, which is configured to control a configuration of at least one reduced capability user equipment (10) in the cellular network (50),
- a processor coupled with the management function, wherein the processor is configured to execute the step of the method (100) according to claim 10.

12. A computer program comprising instructions to cause
- the reduced capability user equipment (10) according to claim 9 to executive the steps of the method according to one of claims 1 to 8, and/or
- the node (55) according to claim 11 to executive the steps of the method according to claim 10.

13. A computer-readable medium having stored thereon the computer program of claim 12.
